Europäisches Patentamt

European Patent Office

Office européen des brevets

(11) Veröffentlichungsnummer: **0 327 652 B1**

(19)

(12) **EUROPÄISCHE PATENTSCHRIFT**

(45) Veröffentlichungstag der Patentschrift: **16.12.92**

(51) Int. Cl.⁵: **B65G  13/11**, B65G 21/06

(21) Anmeldenummer: **88101752.9**

(22) Anmeldetag: **06.02.88**

(54) Verfahren zur Herstellung einer Förderrollenbahn mit Tragprofilen sowie eine Förderollenbahn hierzu.

(43) Veröffentlichungstag der Anmeldung:
**16.08.89 Patentblatt  89/33**

(45) Bekanntmachung des Hinweises auf die
Patenterteilung:
**16.12.92 Patentblatt  92/51**

(84) Benannte Vertragsstaaten:
**BE DE FR GB IT SE**

(56) Entgegenhaltungen:
**EP-A- 0 149 694       EP-A- 0 149 694**
**EP-A- 0 149 694       DE-A- 3 136 597**
**DE-A- 3 136 597       DE-U- 8 713 958**
**FR-A- 2 449 622       US-A- 4 415 074**
**US-A- 4 415 074**

(73) Patentinhaber: **CARL SCHENCK AG**
**Landwehrstrasse 55 Postfach 40 18**
**W-6100 Darmstadt(DE)**

(72) Erfinder: **Kappeler, Dieter, Dr.**
**Ringstrasse 162**
**W-6101 Rossdorf(DE)**
Erfinder: **Fleischmann, Klaus**
**Am Hausweg 26**
**W-6103 Griesheim(DE)**

(74) Vertreter: **Dallhammer, Herbert, Dipl.-Ing.**
**CARL SCHENCK AG Patentabteilung Post-**
**fach 4018 Landwehrstrasse 55**
**W-6100 Darmstadt(DE)**

EP 0 327 652 B1

## Beschreibung

Die Erfindung betrifft ein Verfahren zur Herstellung einer Förderrollenbahn mit im wesentlichen sich in Förderrichtung erstreckenden Tragprofilen und mit an den Tragprofilen angeordneten Förderrollen, wobei Einzelprofile zu Tragprofilen lösbar verbunden werden, sowie eine Förderrollenbahn mit zueinander parallelen, im Abstand voneinander angeordneten, im wesentlichen in Förderrichtung sich erstreckenden Tragprofilen mit an oder zwischen diesen angeordneten Förderrollen, wobei je Tragprofil mindestens ein an mindestens einer Profilseite mit mindestens einem Längsschlitz versehenes Auflageprofil zur Führung, zur Verschiebung und Halterung von Verbindungsteilen vorgesehen ist, sowie eine solche Förderrollenbahn.

Bei der Verkettung von Bearbeitungsmaschinen miteinander oder mit Prüfmaschinen werden im allgemeinen Förderrollenbahnen benutzt. Hierzu ist es erforderlich, daß diese Förderrollenbahnen im Übergabebereich zu den Bearbeitungsmaschinen oder den Prüfmaschinen in der Höhe ausgerichtet sind und im Verlauf zwischen diesen Maschinen ebenfalls in der Höhe ausgerichtet verlaufen. Dieselben Probleme treten auch bei der Verkettung von Förderrollenbahnen zum Transport von Stückgütern oder auf Paletten befindlichen empfindlichen Transportgütern beim Umschlag vom Land zum See oder Lufttransport oder beim Umschlag von einem Transportmittel zum anderen, beispielsweise Schiene, Straße, ebenfalls auf.

Es hat nicht an Versuchen gefehlt, derartige Förderrollenbahnen an die jeweiligen Erfordernisse anzupassen. So wird in der DE-OS 28 38 974 vorgeschlagen, zum Ausrichten einer Förderrollenbahn mit parallel zueinander im Abstand voneinander angeordneten, in U-Profilen gelagerten Spurkranzrollen eine Ausrichtung der jeweiligen Spurkranzrollenabschnitte dadurch zu erreichen, daß die Stirnflächen des einzelnen U-Profils mechanisch bearbeitet werden. Ändert sich bei einer derartigen Förderrollenbahn jedoch das zu fördernde Gut, so muß in Abhängigkeit vom Fördergut eine komplette neue "Spurkranzschiene" hergestellt und eingebaut werden. Falls eine derartige Förderrollenbahn für verschieden schweres Fördergut eingesetzt werden soll, sind verschiedene Spurkranzrollenschienen herzustellen und aneinander anzupassen. Beispielsweise müssen bei der Montage eines Bauteils entweder von Anfang an überdimensionierte Spurkranzrollenschienen verwendet werden, um diese Förderrollenbahn auch für das fertige Bauteil verwendbar zu machen, welches beispielsweise von der Förderrollenbahn eine höhere Torsionssteifigkeit und ein höheres Widerstandmoment verlangt, oder es müssen mehrere, verschiedenes Widerstandsmoment und verschiedenes Torsionsmoment besitzende Förderrollenbahnen hintereinander angeordnet und ausgerichtet werden. Eine derartige Förderrollenbahn ist aufwendig.

Erfordert es die Gegebenheit, beim Transport von Werkstücken zwischen Bearbeitungsmaschinen oder Prüfmaschinen durchgehende Rollen von einer zur anderen Schiene zu verwenden, läßt sich dieses bisher nur mit Hilfe der beispielsweise durch die DE-AS 12 13 349 bekannt gewordenen Rollenbahn bewerkstelligen. Es ist verständlich, daß die Vereinigung zweier derart verschiedener Förderrollenbahnsysteme zu großen Schwierigkeiten im Hinblick auf eine gegenseitige Anpassung führt. Auch wird der Übergang von einem zum anderen System im Hinblick auf das genaue Ausrichten und die Steifigkeit der einzelnen Abschnitte zueinander beachtliche Schwierigkeiten verursachen, insbesondere dann, wenn beim genannten Beispiel der Montage eines Bauteils in Abhängigkeit vom zunehmenden Gewicht des Bauteils auch der Achsabstand zwischen den einzelnen Förderrollen variiert werden soll.

Durch die US-A-4415074 ist eine Einrichtung bekannt geworden, bei der die Einzelprofile zu Tragprofilen lösbar verbunden werden, wobei je Tragprofil mindestens ein an mindestens einer Profilseite mit mindestens einem Längsschlitz versehenes Auflageprofil zur Führung, zur Verschiebung und Halterung von Verbindungsteilen vorgesehen ist, und zwar für den Fall, wenn das Werkstück (z. B. Schwerkraftförderer) als Antrieb für die Förderrollenbahn dient.

Ausgehend hiervon liegt der Erfindung die Aufgabe zugrunde, eine Modulbauweise für Förderrollenbahnen bei beliebigem Achsabstand der Förderrollen und einfacher Zugänglichkeit für ein Umrüsten des Moduls in Vorschlag zu bringen, wobei die Erfordernisse im Hinblick auf Widerstandsmoment, Torsionsmoment, Fertigungsgenauigkeit und Anpassungsgenauigkeit an anzuschließende Einrichtungen gleichzeitig erfüllt sind, unabhängig davon, ob die Förderrollenbahn vom Werkstück angetrieben wird oder einen Eigenantrieb besitzt, und bei Förderrollenbahnen mit Eigenantrieb einen zusätzlichen Spannvorgang des Antriebsmittels zu vermeiden.

Diese Aufgabe wird mit den erfinderischen Verfahrensmerkmalen des Verfahrensanspruchs gelöst. Durch das lösbare Verbinden von Einzelprofilen zu Tragprofilen wird in überraschend einfacher Weise einer einfachen Anpassung der Förderrollenbahn an die beispielsweise bei einer Montage erforderliche Steigerung des Widerstandsmoments und des Torsionsmoments der Förderrollenbahn Rechnung getragen, auch wenn für dieses Montageverfahren bei einer vom Werkstück angetriebenen Förderrollenbahn mit zunehmendem Gewicht des montierten Bauteils eine Achsabstandsverringerung erforderlich wird und auch für eine mit Eigenantrieb versehene Förderrollenbahn; die unter Schutz zu stellenden Verfahrensschritte lehren über die lösbare Verbindung der Einzelprofile zu Tragprofilen hinaus, daß gleichzeitig die Antriebsmittel durch die an einem Profil angeordneten Förderrollen gespannt werden. Damit wird in überraschender Weise auch am Beispiel einer Montage eines Bauteils ein beliebig variabler Achsabstand der Förderrollen bei einer Modulbauweise durch Einsatz verschieden langer Antriebsmittel erreicht. Auch läßt sich durch das lösbare Fixieren darüber hinaus eine eindeutige rechnerische Bestimmung für das Widerstands- und Torsionsmoment durchführen, wie es bisher nur bei nicht mehr lösbaren Tragprofilen möglich war.

Ausgehend von der in der US-A-4415074 offenbarten Förderrollenbahn mit zueinander parallelen, im Abstand voneinander angeordneten, im wesentlichen in Förderrichtung sich erstreckenden Tragprofilen mit an oder zwischen diesen angeordneten Förderrollen, wobei je Tragprofil mindestens ein an mindestens einer Profilseite mit mindestens einem Längsschlitz versehenes Auflageprofil zur Führung, zur Verschiebung und Halterung von Verbindungsteilen vorgesehen ist, läßt sich die der Erfindung zugrunde liegende Aufgabe durch die kennzeichnenden Merkmale des Anspruchs 2 lösen. Durch das erfinderische Vorsehen mindestens eines Stegprofils zur Aufnahme einer Lagerung für mindestens eine Förderrolle, welches in seiner Höhe, Länge und Dicke wählbar ist, und durch das erfindungsgemäße lösbare Verbinden mittels der Verbindungsteile und das Durchführen eines lösbaren Formschlusses zwischen Stegprofil und Auflageprofil wird eine erfindungsgemäße Förderrollenbahn vorgeschlagen, mit der die der Erfindung zurundeliegende Aufgabe gelöst wird.

Insbesondere kann bei Beibehalten des mindestens einen Auflageprofils durch Auswahl der Steghöhe und der Stegdicke ein Tragprofil vorgeschriebenen Widerstands- und Torsionsmoments hergestellt werden, ohne daß verschiedene Tragprofile, wie bisher stets erforderlich, am Lager gehalten werden mußten. Die Variierbarkeit der Stegdicke bezieht sich auch auf die variierbare Dicke des Stegs über die Steghöhe, beispielsweise bei Ausgestaltung des Stegs über die Höhe als Dreieck. Wird erfindungsgemäß beidseitig des Stegs ein mit diesem verbindbares Auflageprofil vorgesehen, so entsteht ein sogenanntes C-Profil, welches darüber hinaus den Vorteil besitzt, durch Bestimmung der Stegbreite zwischen den einzelnen, an den Stegen gelagerten Förderrollen offene Durchtrittsräume zu schaffen, was zusätzlich zur Gewichtsersparnis führt. Diese Durchtritte sind auch bei Montage-und Reparaturarbeiten und zur Überwachung der die Förderrollen antreibenden Gurte oder Ketten besonders vorteilhaft. Bei den Förderrollen kann es sich hierbei um Spurkranzrollen oder kurze glatte Rollen handeln, die an dem einen Tragprofil der Förderrollenbahn angeordnet sind, oder um durchgehende Rollen, die von einem Tragprofil zum andern Tragprofil der Förderrollenbahn reichen.

In noch weiterer Ausgestaltung des Erfindungsgegenstandes gemäß Anspruch 3 ist das Auflageprofil L-förmig ausgebildet, dessen kurzer Schenkel einen Längsschlitz und eine Schulter zur Abstützung des Stegprofils trägt und dessen langer Schenkel an seiner Außenseite und an seiner Stirnseite je einen Längsschlitz besitzt. Hierdurch wird bei fertig montiertem Tragprofil das Stegprofil durch Auswahl der Schulterbreite ohne Übergang und damit der Gefahr von Verletzungen den kurzen L-Schenkel des Auflageprofils verlängern. Die Längsschlitze am längeren Schenkel des Auflageprofils dienen zum Einbau von Stützen für die Verankerung der Förderrollenbahn mit ihren Tragprofilen am Untergrund, und die Längsschlitze an der Stirnseite des längeren Schenkels dienen beispielsweise zur Aufnahme von Endschaltern oder zur Aufnahme einer Abdeckung, die ein C-Profil beispielsweise zum geschlossenen Kastenprofil ergänzt. Hierbei befinden sich die Antriebselemente in dem nach außenhin geschlossenen Kasten und können von innen durch die Durchbrechungen zwischen den einzelnen Förderrollen überwacht und gewartet werden.

In Ausgestaltung der erfinderischen Förderrollenbahn wird gemäß Anspruch 4 vorgeschlagen, mindestens ein weiteres, in seiner Höhe, Länge und Dicke wählbares Stegprofil ohne Lagerung für eine Förderrolle vorzusehen. Hierdurch kann allein durch derartige Stegprofile die erforderliche Torsionssteife und das Widerstandsmoment erreicht werden, ohne daß die die Lagerung der Förderrollen tragenden Stegprofile für das erforderliche Torsionsmoment und Widerstandsmoment mitberücksichtigt werden müssen, was im Hinblick auf die Belastung der Lagerung der Förderrollen und der Förderrollen selbst von Vorteil ist.

Die in Anspruch 5 unter Schutz gestellte besondere Längsschlitzform als T-Form hat gegenüber einem glatten Längsschlitz den Vorteil, daß das lösbare Verbindungsmittel auch ohne Klemmung des Verbindungsmittels gegen die Längsschlitzwände am Herausfallen gehindert wird, wenn es einen der T-Form angepaßten Kopf besitzt. Bei den lösbaren Verbindungsmitteln kann es sich um Schrauben, lösbare Knebel oder Keilverbindungen handeln, wobei in diesem Fall ein glattes Rohr mit Kopf in den T-Schlitz eingeführt wird, das am vom Kopf entfernten Ende ein Fenster für einen durchzusteckenden Keil trägt. Die erfindungsgemäße lösbare Fixierung kann beispielsweise durch Paßstifte oder Paßschrauben erfolgen.

In noch weiterer Ausgestaltung des Erfindungsgegenstandes sind die Stegprofile an ihren freien Enden winkelig abgekantet. Diese winkelige Abkantung kann zur Aufnahme von Steuerorganen für die Förderrollenbahn dienen oder auch zur Verschraubung eines das Tragprofil abdeckenden Kastens.

In Anspruch 7 wird ein Stegprofil als A-Profil unter Schutz gestellt, das den kurzen Schenkel des Auflageprofils übergreift. Derartige A-Profile sind besonders für die fliegende Lagerung von kurzen glatten oder von Spurzkranzrollen geeignet. Werden glatte Rollen benutzt, so kann auf dem Dach des A-Profils eine Führungsrolle mit vertikaler Achse angeordnet werden, um das zu fördernde Gut zu führen.

Es können für die Montage derartiger Förderrollenbahnen Montagekämme vorgesehen sein, die ein vorgegebenes Kerbmuster für den Achsabstand der einzelnen Förderrollen besitzen. Hierdurch ist es durch möglich geworden, beispielsweise bei der Fertigung von Bauteilen mit zunehmendem Gewicht den Achsabstand kontinuierlich zu verringern.

Erfindungsgemäße Förderrollenbahnen sind herstellbar aus Eisen- und Nichteisenmetallen, genau wie aus Kunststoffen oder einer Kombination dieser Werkstoffe.

In der nachfolgenden Zeichnung wird die Erfindung an Ausführungsbeispielen näher erläutert.

Es zeigen:

Fig. 1
ein als C-Profil ausgebildetes Tragprofil in Modulbauweise

Fig. 2a, 2b, 2c
verschiedene Stegprofile

Fig. 3
ein C-Profil mit einem Doppelsteg für fliegende Lagerung einer Spurkranzrolle

Fig. 4a
eine diskontinuierliche Änderung von Achsabständen entlang eines Tragprofils und

Fig. 4b
kontinuierliche Änderung von Achsabständen entlang eines Tragprofils

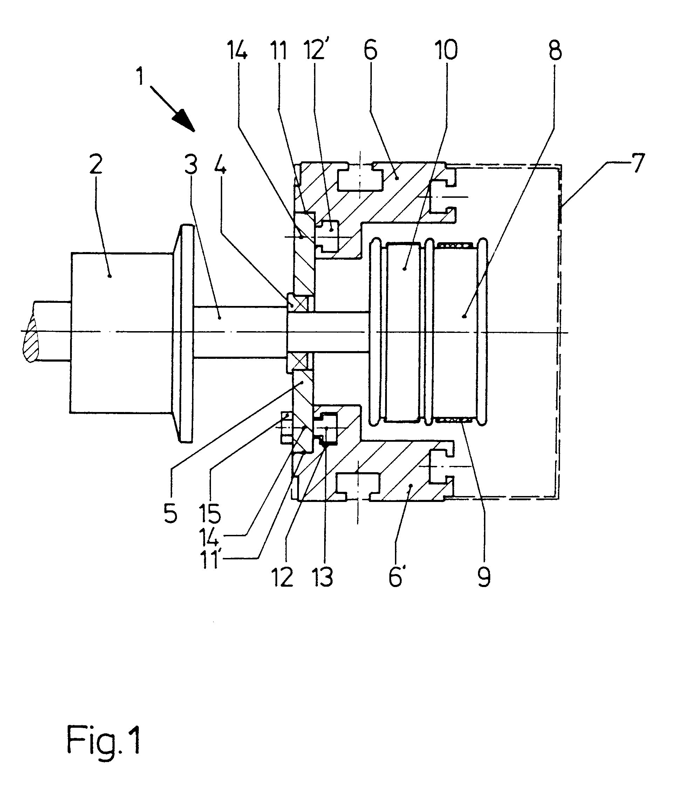

Gemäß Fig. 1 ist an einem Tragprofil 1 eine Spurkranzrolle 2 über eine Welle 3 in einem Lager 4 gelagert.

Das Tragprofil besteht aus einem Stegprofil 5 und zwei Auflageprofilen 6 und 6′ und bildet somit ein C-Profil.

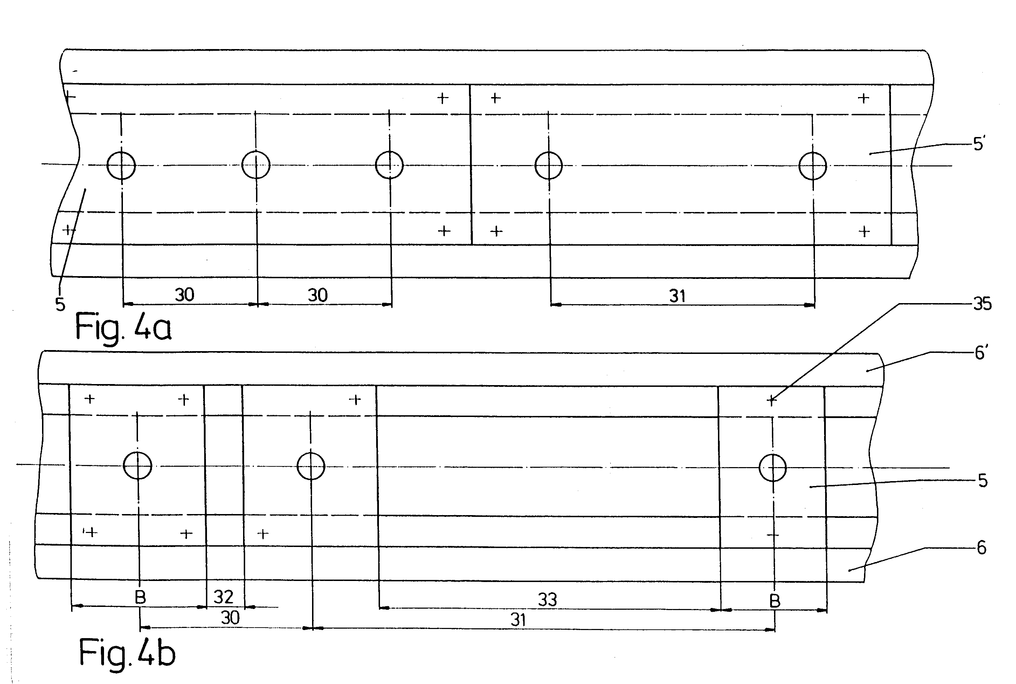

Die Auflageprofile 6, 6′ sind über eine Abdeckung 7 miteinander verbunden, so daß das Tragprofil 1 von außerhalb der Förderrollenbahn als ein geschlossenes Kastenprofil erscheint. Von der Spurkranzrolle 2 aus gesehen (vgl. hierzu auch Fig. 4b), sind zwischen den Stegprofilen 5 jedoch Durchbrechungen vorhanden, die vom einen zum anderen Auflageprofil sich erstrecken. Über diese Durchbrechungen kann die Förderrollenbahn gewartet und überwacht werden. Die Förderrollen 2 können auch mit Kupplungen oder Friktionsmechanismen ausgerüstet sein, beispielsweise für das Stauen von Fördergut.

Innerhalb des Hohlprofils befindet sich im Ausführungsbeispiel gemäß Fig. 1 eine Antriebsrolle 8 für den Antrieb der Spurkranzrollen 2. Die Antriebsrolle 8 besitzt zwei Antriebsflächen. Diese dienen dazu, vom nicht dargestellten Antriebsmotor die Spurkranzrolle 2 anzutreiben und gleichzeitig mit der anderen Antriebsfläche eine weitere dahinterliegende Spurkranzrolle oder auch eine glatte Rolle, die von einem zum anderen Tragprofil 1 reicht, anzutreiben. Besitzt auch die nächste Rolle eine der Antriebsrolle 8 gleiche Antriebsrolle, so kann von hier aus eine auf diese folgende Rolle ebenfalls angetrieben werden. Wie der Fig. 1 ebenfalls zu entnehmen ist, erstreckt sich die Welle 3 durch die Spurkranzrolle 2 hindurch bis zum anderen nicht dargestellten Tragprofil 1 der Förderrollenbahn mit einer zweiten, ebenfalls nicht dargestellten, Spurkranzrolle 2. Im Falle des Ausführungsbeispiels gemäß Fig. 1 reicht es aus, wenn in dem nicht dargestellten Tragprofil die Welle 3 lediglich in dem ebenfalls nicht dargestellten Stegprofil 5 gelagert ist. Eine zusätzliche Antriebsrolle 8 ist hierbei nicht erforderlich. Die Antriebsrolle 8 kann von einem Antriebsriemen 9 angetrieben werden, während ein Abtriebsriemen 10 den Antrieb der nächsten Spurkranzrolle 2 bewirkt. An die Stelle der in Fig. 1 dargestellten Flachriemen können Zahnriemen, Keilriemen oder Ketten auch als durchgehendes Antriebsmittel treten.

Das das Lager 4 tragende Stegprofil 5 stützt sich auf einer Schulter 11, 11′ an den Auflageprofilen 6, 6′ ab. Die Auflageprofile 6, 6′ tragen T-Nuten 12, 12′ auf dem kurzen Schenkel und sind als L-Profile ausgebildet. In den T-Nuten 12, 12′ sind im Auführungsbeispiel gemäß Fig. 1 Schrauben 13 verschieb-, führ- und arretierbar angeordnet und werden durch Durchgangsbohrungen 14, 14′, die sich im Stegprofil 5 befinden, mit Muttern 15 fest verschraubt. Anstelle von T-Nuten können z. B. auch Schwalbenschwanz- oder T-Nuten mit Halbrundgrund treten

Im Falle der Fig. 1 dient die Welle 3 gleichzeitig als Distanzstück für die beabstandete parallele Anordnung zweier Tragprofile zur Bildung einer Rollenförderbahn.

In der Zeichnung sind in allen Figuren dieselben Bauteile mit gleichen Bezugsziffern versehen.

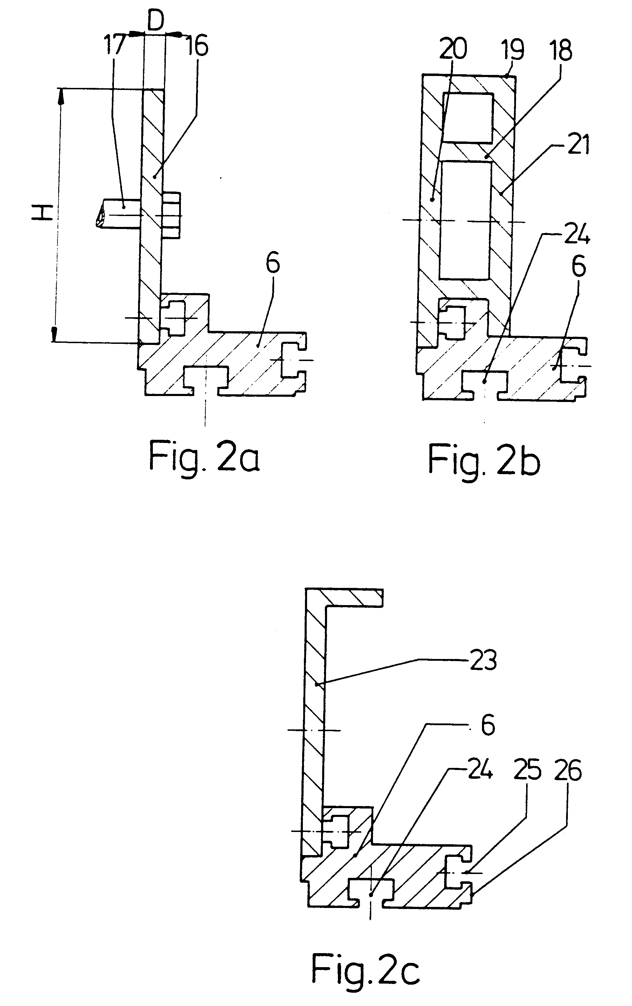

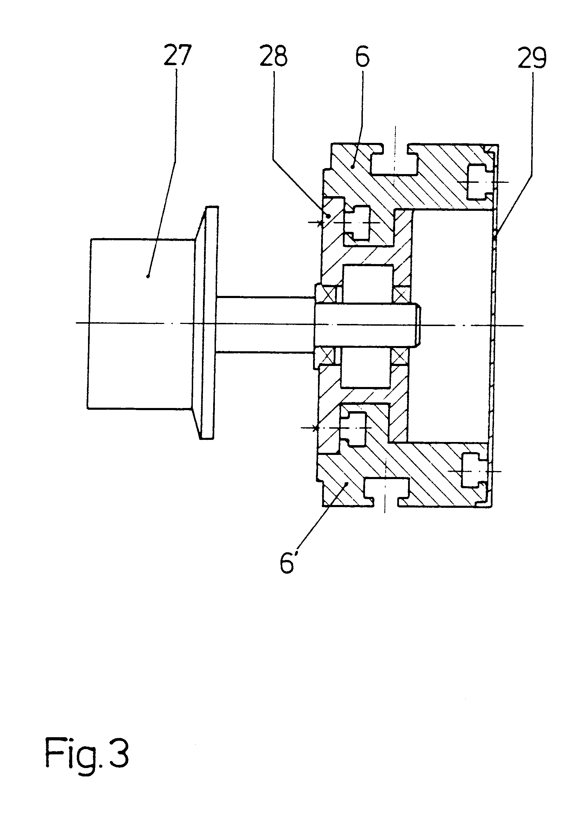

Fig. 2a zeigt ein Stegprofil 16, welches mit einem Auflageprofil 6 verbunden ist. Das Stegprofil 16 besitzt keine Bohrung für die Aufnahme eines Lagers sondern stellt ein Stegprofil dar, welche durch variierbare Höhe H, variierbare Dicke D und variierbare Breite B entsprechend dem geforderten Widerstandsmoment und Torsionsmoment ausgebildet ist. Gleichzeitig hat dieses Stegprofil 16 die Aufgabe, den Abstand zwischen zwei parallelen Tragprofilen 1 zu bewirken. Hierzu wird eine Abstandsstange 17 beispielsweise in das Stegprofil eingeschraubt. Anstelle des Einschraubens der Abstandsstange kann auch eine Befestigung durch Klemmen treten. Insbesondere bei fliegender Lagerung von Tragrollen (vgl. hierzu Fig. 3) kann mit Hilfe der Abstandsstangen 17 eine übersichtliche Gestaltung der Förderrollenbahn treten, ohne daß zusätzliche unterhalb oder oberhalb der Förderrollenbahn vorgesehene Abstandseinrichtungen zwischen den Tragprofilen 1 eingebaut werden müssen, die stets das Förderprofil einengen.

Fig. 2b zeigt ein A-Profil 18, welches sich auf einem L-förmigen Auflageprofil 6 abstützt. Das Dach 19 des A-Profils kann zur Verankerung von Geräten zur Steuerung der Förderrollenbahn dienen.

Im Ausführungsbeispiel gemäß Fig. 2b ist das A-Profil 18 aus Guss, Strangguss oder Spritzguss hergestellt. Durch den Abstand der Wangen 20, 21 kann ein Doppellager zur Lagerung einer Spurkranzrolle 2, wenn diese fliegend gelagert ist, treten.

Fig. 2c zeigt ein L-Stegprofil 23, welches einerseits mit dem Auflageprofil 6 mittels Schrauben verbunden ist und an seinem freien Ende durch Ausbilden als L die Möglichkeit bietet, an dieser Stelle Steuereinrichtungen für die Betätigung der Förderrollenbahn anzubringen. Das Auflageprofil 6 besitzt an seinem langen L-Schenkel eine weitere Nut 24. In dieser Nut können Stützkonstruktionen für die Förderrollenbahn verschieb-und arretierbar angeordnet sein, um die Förderrollenbahn selbst mit dem Fundament verbinden zu können.

Eine weitere Nut 25 an der Stirnfläche 26 des langen Schenkels des Auflageprofils 6 kann zur Führung der Abdeckung 7 oder zur Anordnung von Steuergeräten an der Förderrollenbahn dienen.

Fig. 3 zeigt eine fliegend gelagerte Spurkranzrolle 27 in einem aus Auflageprofilen 6, 6′ und einem als H-Profil 28 ausgebildeten Stegprofil gebildeten C-Profil, welches von einer Abdeckplatte 29 abgedeckt wird.

Bei dem Ausführungsbeispiel gemäß Fig. 3 handelt es sich um eine nicht angetriebene Förderrollenbahn.

Die in Fig. 4a dargestellte Anordnung von Stegprofilen 5, 5′ zeigt eine diskontinuierliche Änderung der Achsabstände 30 im Stegprofil 5 und der Achsabstände 31 im Stegprofil 5′. In diesem Falle stoßen die Stegprofile 5, 5′ bündig aneinander, so daß kein Zwischenraum entsteht.

In Fig. 4b sind Stegprofile 5 mit verschiedener Länge B dargestellt, wobei gleichzeitig die Achsabstände 30, 31 kontinuierlich variierbar sind. Damit entstehen auch verschiedene Zwischenräume 32, 33. In Fig. 4b ist auch die lösbare Fixierung zwischen den Tragprofilen 6, 6′ und den Stegprofilen 5 mittels Zentrierstiften 35 dargestellt.

## Patentansprüche

1. Verfahren zur Herstellung einer Förderrollenbahn mit im wesentlichen sich in Förderrichtung ersteckenden Tragprofilen (1) und mit an den Tragprofilen (1) angeordneten Förderrollen (2), wobei Einzelprofile zu Tragprofilen lösbar verbunden werden, und mit an den Tragprofilen angeordneten, von einem Antriebsaggregat über Antriebsmittel antreibbaren Förderollen, dadurch gekennzeichnet, daß bei lösbarer Verbindung der Einzelprofile zu Tragprofilen gleichzeitig die Antriebsmittel (10) durch die an einem Profil angeordneten Förderrollen (8) gespannt werden.

2. Förderrollenbahn mit zueinander parallelen, im Abstand voneinander im wesentlichen in Förderrichtung sich erstreckend angeordneten Tragprofilen (1) mit an oder zwischen diesen angeordneten Förderrollen (2), wobei je Tragprofil mindestens ein an mindestens einer Profilseite mit mindestens einem Längsschlitz (12) versehenes Auflageprofil (6,6') zur Führung, zur Verschiebung und Halterung von Verbindungsteilen (13, 15) vorgesehen ist, dadurch gekennnzeichnet, daß je Tragprofil mindestens ein in seiner Höhe, Länge und Dicke nach Bedarf wählbares, zur Aufnahme einer Lagerung (4) mindestens einer Förderrolle (2) vorgesehenes Stegprofil (5,5'; 16; 20; 23; 28) vorgesehen ist und daß das mindestens eine Stegprofil mit dem mindestens einen Auflageprofil (6,6') mittels der Verbindungsteile (13, 15) lösbar verbunden ist und/oder daß Stegprofil und Auflageprofil miteinander durch einen lösbaren Formschluß (35) verbunden sind.

3. Förderrollenbahn nach Anspruch 2, dadurch gekennzeichnet, daß das Auflageprofil (6) L-förmig ausgebildet ist, daß dessen kurzer Schenkel einen Längsschlitz (12) und eine Schulter (11, 11') zur Abstützung des Stegprofils (5, 16, 18, 23, 28) in horizontaler Richtung besitzt und daß dessen langer Schenkel an seiner Außenseite und an seiner Stirnseite (26) je einen Längsschlitz (24 bzw. 25) besitzt.

4. Förderrollenbahn nach Anspruch 2 oder 3, dadurch gekennzeichnet, daß mindestens ein weiteres, in seiner Höhe, Länge und Dicke wählbares Stegprofil (16) ohne Lagerung für eine Förderrolle vorgesehen ist.

**5.** Förderrollenbahn nach Anspruch 3 oder 4, dadurch gekennzeichnet, daß die Längsschlitze T-förmig (13, 24, 25) ausgebildet sind.

**6.** Förderrollenbahn nach einem der Ansprüche 2 - 5, dadurch gekennzeichnet, daß die Stegprofile an ihrem freien Ende winklig abgekantet sind.

**7.** Förderrollenbahn nach einem der Ansprüche 2 - 6, dadurch gekennzeichnet, daß das Stegprofil als A-Profil den kurzen Schenkel des Auflageprofils übergreift.

**Claims**

**1.** Method for manufacturing a conveyor roller track with load-bearing sections (1) extending substantially in the conveying direction and with conveyor rollers (2) disposed on the load-bearing sections (1), in which individual sections are detachably connected to load-bearing sections, and with conveyor rollers disposed on the load-bearing sections and drivable by a drive assembly via driving means, **characterised in that** with detachable connection of the individual sections to load-bearing sections at the same time the driving means (10) are tensioned by the conveyor rollers (8) disposed on a section.

**2.** Conveyor roller track with mutually parallel load-bearing sections (1) disposed spaced from one another and extending substantially in the conveying direction with conveyor rollers (2) disposed on or between the latter, in which there is provided for each load-bearing section at least one support section (6, 6') furnished on at least one section side with at least one longitudinal slot (12) for the guiding, the displacement and the holding of connecting parts (13, 15), **characterised in that** there is provided for each load-bearing section at least one web section (5, 5'; 16; 20; 23; 28), selectable as required with respect to its height, length and thickness, for accommodating a bearing (4) of at least one conveyor roller (2) and that the at least one web section is detachably connected with the at least one support section (6, 6') by means of the connecting parts (13, 15) and/or the web section and support section are connected to one another by a detachable form closure (35).

**3.** Conveyor roller track according to claim 2, **characterised in that** the support section (6) is constructed L-shaped, that its short member possesses a longitudinal slot (12) and a shoulder (11, 11') for supporting the web section (5, 16, 18, 23, 28) in horizontal direction and that its long member possesses respectively on its outer side and on its front side (26) a longitudinal slot (24 and 25).

**4.** Conveyor roller track according to claim 2 or 3, **characterised in that** at least one further web section (16) selectable as regards its height, length and thickness is provided without bearing for a conveyor roller.

**5.** Conveyor roller track according to claim 3 or 4, **characterised in that** the longitudinal slots (13, 24, 25) are constructed T-shaped.

**6.** Conveyor roller track according to any one of claims 2 - 5, **characterised in that** the web sections are bevelled at an angle at their free end.

**7.** Conveyor roller track according to any one of claims 2 - 6, **characterised in that** the web section overlaps as an A-section the short member of the support section.

**Revendications**

**1.** Procédé pour l'assemblage de la voie d'un convoyeur à rouleaux utilisant des profilés supports (1) s'étendant sensiblement dans la direction du transport et des galets de transport (2) disposés sur les profilés supports (1), des profilés élémentaires étant liés démontables pour constituer les profilés supports, et utilisant des galets de transport, disposés sur les profilés supports et susceptibles d'être entraînés par un groupe d'entraînement, par l'intermédiaire de moyens d'entraînement, caractérisé en ce que, en cas d'une liaison démontable des profilés élémentaires pour constituer des profilés supports, les moyens d'entraînement (10) sont simultanément entraînés au moyen des galets de transport (8) disposés sur un profilé.

**2.** Convoyeur à rouleaux comportant des profilés supports (1) parallèles entre eux, disposés à distance les uns des autres, et s'étendant sensiblement dans la direction du transport, avec des galets de transport (2) disposés sur ou entre les profilés supports (1), dans lequel chaque profilé support présente, pour assurer le guidage, le déplacement et la fixation de pièces de liaison (13, 15), au moins un profilé d'appui (6, 6') pourvu, sur au moins une face du profilé, d'au moins une fente longitudinale (12), caractérisé en ce que chaque profilé support comporte au moins un profil nervuré (5, 5'; 16 ; 20 ; 23 ; 28), pouvant être choisi selon les besoin, dans sa hauteur, sa longueur et son épaisseur, pour recevoir un palier de rotation (4) d'au moins un galet de transport (2), et en ce que le au moins un profil nervuré est relié démontable à au moins un profil d'appui (6, 6'), au moyen des pièces de liaison (13, 15), et/ou en ce que le profil nervuré et le profil d'appui sont reliés ensemble au moyen d'un ajustement de forme (35) démontable.

3. Convoyeur à rouleaux selon la revendication 2, caractérisé en ce que le profil d'appui (6, 6') est en forme de L, en ce que sa branche courte comporte une fente longitudinale (12) et un épaulement (11, 11'), en vue de d'appui du profil nervuré (5, 16, 18, 23, 28) en direction horizontale et en ce que sa branche longue présente sur sa face extérieure, d'une part, et sur sa face frontale (26), d'autre part, une fente longitudinale (24 ou 25).

4. Convoyeur à rouleaux selon la revendication 2 ou 3, caractérisé en ce qu'est prévu au moins un autre profil nervuré (16), dont la hauteur, la longueur et l'épaisseur sont susceptibles d'être choisies et qui ne comporte aucun palier de rotation pour un galet de transport.

5. Convoyeur à rouleaux selon la revendication 3 ou 4, caractérisé en ce que les fentes longitudinales (13, 24, 25) sont en forme de T.

6. Convoyeur à rouleaux selon l'une des revendications 2 à 5, caractérisé en ce que les profils nervurés sont chanfreinés à leur extrémité libre.

7. Convoyeur à rouleaux selon l'une des revendications 2 à 6, caractérisé en ce que le profil nervuré entoure, sous forme d'un profilé en A, la branche courte du profil d'appui.

Fig.1

Fig. 2a

Fig. 2b

Fig.2c

Fig.3

Fig. 4a

Fig. 4b